# EUROPEAN PATENT SPECIFICATION

(11) **EP 0 398 711 B1**
(45) Date of publication and mention of the grant of the patent: **15.03.1995**
(21) Application number: 90305331.2
(22) Date of filing: 17.05.1990
(51) Int. Cl.: H04M 1/274

(54) **Telephone with abbreviated dialling function**
Telefon mit einer Kurzwahl-Funktion
Téléphone muni d'une fonction de numérotation abrégée

(30) Priority: 18.05.1989 JP 125414/89
(43) Date of publication of application: 22.11.1990
(73) Proprietor: NEC CORPORATION, Tokyo (JP)
(72) Inventor: Tamura, Yoshiharu, Minato-ku, Tokyo (JP)
(74) Representative: Orchard, Oliver John

(56) References cited:
- EP-A- 0 120 476
- EP-A- 0 120 477
- DE-C- 3 139 501
- FR-A- 2 494 063
- SYSTEMS & COMPUTERS IN JAPAN vol. 19, no. 12, September 1988, SILVER SPRING,MD,US pages 45 - 52; H. MATSUI ET AL:'MENTAL MODEL ON TELEPHONE OPERATION '

## Description

The present invention relates to a telephone having a display section, a key input section, and a dial memory storing a plurality of telephone numbers in association with labels each being representative of a subscriber such as an individual or a company, and allowing a person to call a desired subscriber rapidly by a simple operation.

A telephone of the type described is extensively implemented as a wired telephone for office or home use, a vehicle-mounted portable telephone, and so forth. Such a telephone has a so-called abbreviate dialing or speed dialing capability, i. e., a capability of originating a call meant for a desired subscriber by using a telephone number stored in a dial memory. Specifically, as the user operates a key input section to enter a particular address of the dial memory assigned to a desired subscriber, a telephone number and a label representative of the subscriber appear on a display section. Then, the user originates a call on the telephone while watching the display section. More specifically, all that appears on the display section is the telephone number and associated label representative of a subscriber to be called and, moreover, such information does not appear until the user operates the key input section.

As stated above, it has been customary to use the display of the telephone for the purpose of simply confirming the information stored in a particular address of the dial memory which has been keyed in. The user, therefore, has to memorize all the telephone numbers and associated labels in relation to the addresses of the dial memory or to prepare an exclusive speed dialing table listing the addresses of the dial memory and the contents thereof. Despite that a speed dialing function has been originally directed toward promoting convenient call origination, such a function has been rather awkward in practice for the above reasons. Moreover, the displaying function has been simply used for confirmation purpose and has not contributed to the improvement in operability at all.

In the specification of European patent application number 84103184.2, which was published under number 120476 on October 3 1984, there was proposed a video-telephone with special input keys distinct from the normal telephone keypad which enabled certain target numbers to be selected. The keys were positioned in a single line beneath a video screen and each key was directly related to information displayed in a region of the screen extending vertically immediately above the respective key.

In the specification of German Federal Republic patent number 3139501, which was published on February 24 1983, there was proposed a digital telephone subscriber set with keys for initiating control procedures. Some of the keys were allocated a specific control procedure while others were allocated control procedures which could be varied. The particular key allocations at any time were displayed under the control of the sequence control means.

It is one object of the present invention to provide a telephone which allows a person to call a desired subscriber rapidly by an extremely simple operation.

It is another object of the present invention to provide a telephone which advantageously uses a displaying function to make it needless for a person to memorize the correspondence between the addresses of a dial memory and the labels representative of subscribers or to prepare an exclusive speed dialing table listing.

It is yet another object of the present invention to provide a telephone which is improved in cost performance.

A telephone having a dial memory storing a plurality of telephone numbers and a plurality of labels each being associated with respective one of the telephone numbers, a display section, and a key input section of the present invention comprises a display control for displaying, when the telephone is in a simple call origination mode, part of the plurality of labels stored in the dial memory on the display section in a formal which is associated with arrangement of keys on the key input section, and a call origination control for originating a call, when one of the labels appearing on the display section is selected on one of the keys which is associated with that label, by using a telephone number stored in the dial memory in association with that label.

The following description and drawings disclose previously proposed arrangements and, by means of examples, the invention which is characterised in the appended claims, whose terms determine the extent of the protection conferred hereby.

In the drawings:-
Figs. 1 and 2 are perspective views each showing a different configuration of a telephone which is conventional and is applicable to the present invention as well;
Fig. 3 shows specific information appearing on a display section of a prior art telephone in the event of speed dialing;
Fig. 4 shows specific information which sequentially appear on a display section of another prior art telephone in the event of speed dialing;
Fig. 5 is a block diagram schematically showing an essential part of a telephone embodying the present invention;
Fig. 6 is a flowchart demonstrating a specific operation of a control shown in Fig. 5; and
Figs. 7 to 10 each shows a particular format in which labels may be displayed.

### DESCRIPTION OF THE PREFERRED EMBODIMENT

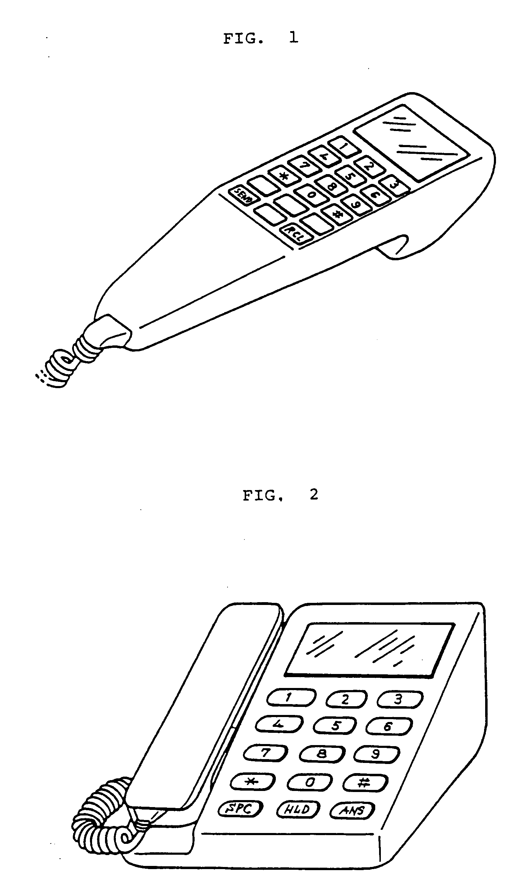

To better understand the present invention, a brief reference will be made to a prior art telephone. Typically, a prior art telephone is configured as shown in Fig. 1 or Fig. 2. The configuration shown in Fig. 1 is applied to many of vehicle-mounted portable telephones, while the configuration shown in Fig. 2 is applied to many of wired telephone sets for home and office use. Such a telephone, whether it be for on-board use or for home or office use, has a built-in dial memory to which telephone numbers may be written. The telephone numbers stored in the memory may be used to originate a call in a speed dialing mode, as follows.

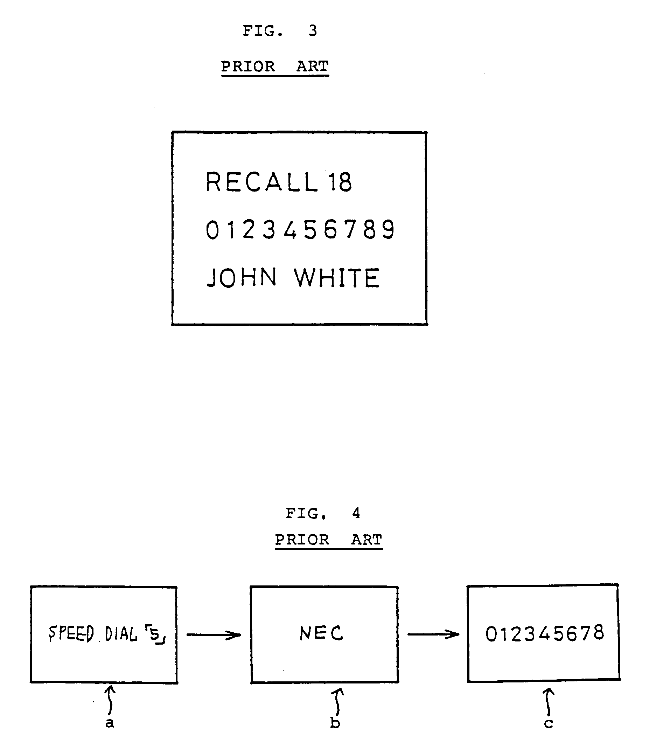

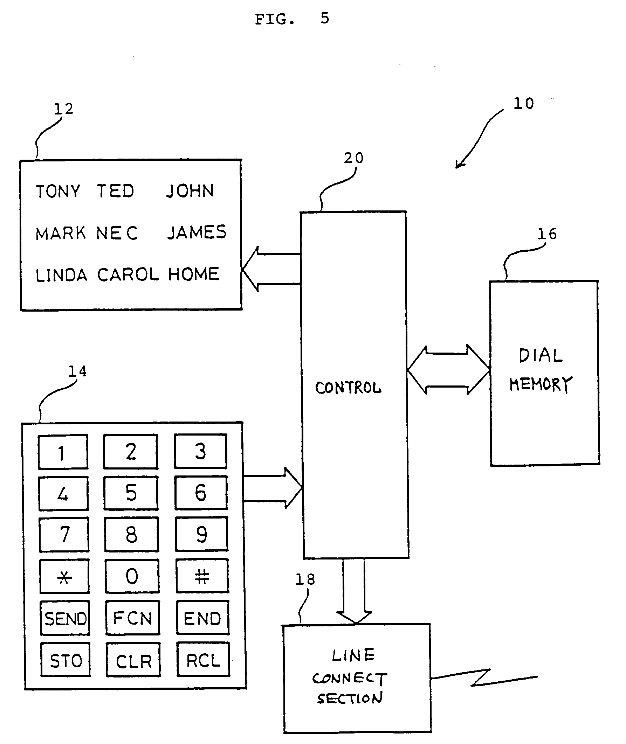

Assume that a person desires to call John White whose telephone number is stored in address #18 of the dial memory of the portable telephone shown in Fig. 1, for example. Then, the operator sequentially presses keys "RCL", "1" and "8" by way of example. In response to such key inputs, information such as shown in Fig. 3 appears on a display which is provided on the telephone. Confirming the information, the operator may press a call origination key "SEND" or similar key to command the origination of a call. In the case of the telephone set of Fig. 2, as the operator sequentially presses keys "SPC" and "5" by way of example, information such as represented by *a* in Fig. 4 appears on a display provided on the telephone set. The information *a* sequentially changes to information *b* and to information *c* at predetermined timings and, finally, a call meant for the desired subscriber whose telephone number is stored in address #5 of the dial memory is originated. In this manner, with no regard to the configuration, the conventional telephone displays on its display only the telephone number and label which are associated with a subscriber to be called and displays them only after the above-stated operation has been completed.

A problem with the prior art telephone is, therefore, that the telephone numbers and their associated labels stored in the dial memory are practically useless unless they are memorized by the user or listed in a table in association with the addresses of the dial memory, as stated earlier. Memorizing all the addresses and labels stored in the dial memory or looking at a table each time is undesirable from the efficiency standpoint.

Referring to Fig. 5, a telephone embodying the present invention is shown and generally designated by the reference numeral 10. As shown, the telephone 10 has a display section 12 capable of displaying two or more labels at the same time, a key input section 14 including numeral keys and various functions keys, a dial memory 16 storing a plurality of telephone numbers and a plurality of labels in association with each other, a line connecting section 18 supervising a line connecting function, and a control 20 governing the entire telephone 10. The telephone 10 may be provided with either one of the configurations shown in Figs. 1 and 2.

The control 20 has a function of controlling, in response to ordinary key inputs on the key input section 14 representative of an ordinary telephone number, the line connecting section 18 to set up a communication path and originate a call. Another function available with the control 20 is to display, when a simple call origination mode is selected, some of the labels stored in the dial memory 16 simultaneously on the display section 12 in such a manner as to clearly show the correspondence between the labels and the keys of the key input section 14. Then, as the operator selects one of the plurality of labels appearing on the display section 12 by pressing associated one of the keys of the key input section 14, the control 20 originates a call by using a particular telephone number stored in the dial memory 16 and associated with the selected label.

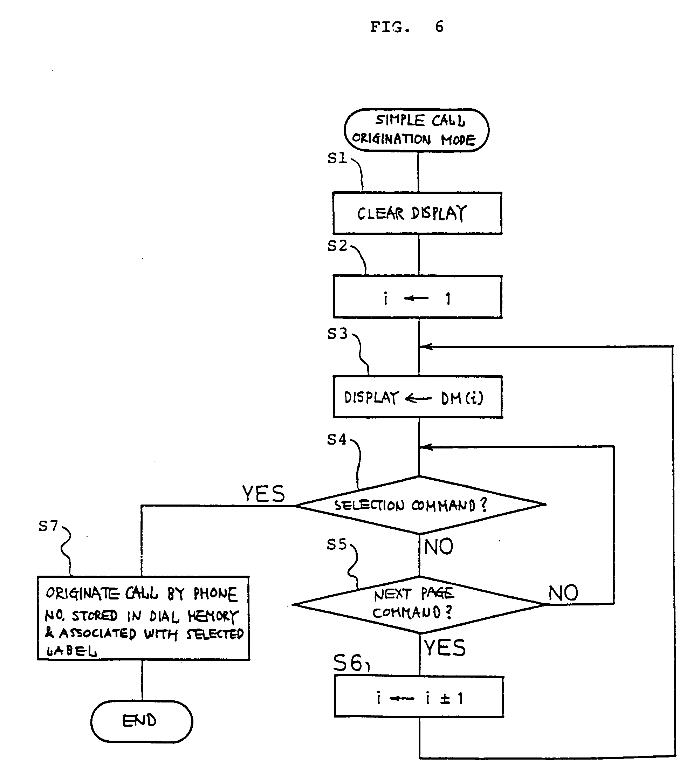

Referring to Fig. 6, specific processing which the control 20 executes in the simple call origination mode is shown. The operation of the illustrative embodiment will be described with reference to Figs. 5 and 6.

Assume that the operator has selected the simple call origination mode on the telephone 10 by pressing keys "FCN" and "#", for example. In response, the control starts on the control in the simple call origination mode by entering into the processing shown in Fig. 6. First, the control 20 clears the display section 12 to delete information appearing thereon (step S1). Then, the control 20 sets a control variable *i* to "1" (step S2), reads data DM (i) representative of a plurality of labels associated with the control variable "1" out of the dial memory 16, and displays those labels on the display 12 in a particular format which clearly shows the correspondence between the labels and the keys of the key input section 14 (step S3). The display section 12 is shown in Fig. 5 as displaying the labels in such a format, i. e., nine labels at the same time and in an arrangement physically matching the arrangement of numeral keys "1" to "9" on the key input section 14. Specifically, the label "TONY" corresponds to the numeral key "1", the label "TED" corresponds to the numeral key "2", the label "HOME" corresponds to the numeral key "9", and so forth.

In the above condition, the control 20 awaits the arrival of a command which may be entered on desired one of the numeral keys "1" to "9" (step S4), or awaits a NEXT PAGE command which may be entered on a particular key of the key input section 14 for replacing the labels appearing on the display section 12 with another group of labels (step S5). Assume that the operator has pressed the numeral key "5" or the numeral key "5" and function key "SEND", for example. Then, the control 20 reads a particular telephone number associated with the label "NEC" having been designated by through the numeral key "5" out of the dial memory 16 and controls the line connecting section 18 to originate a call meant for the subscriber "NEC" (step S7).

Assume that the operator has manipulated the key input section 14 to enter a NEXT PAGE command while the control 20 is in the above-stated waiting state. In response, the control 20 updates the control variable *i* according to a desired direction (step S6) and returns to the step S3. In the step S3, the control 20 reads data DM (i) representative of another group of labels designated by the new control variable *i* out of the dial memory 16 and displays them on the display section 14 in the same format as the previous labels. The operator, therefore, may repetitively operate the key input section 14 to enter the NEXT PAGE command to thereby see the groups of labels one after another on the display section 12, until a desired label appears. As soon as the desired label appears on the display 12, the operator may designate it on the key input section 14 to call the desired subscriber.

Some different approaches are available for matching the different values of the control variable *i* and the groups of labels stored in the dial memory 16, as enumerated below:
(1) dividing the labels stored in the dial memory 16 into a plurality of groups each having nine labels in order of address, and sequentially assigning control variables DM (1), DM (2), ... DM (n) from the first group to the last group;
(2) providing the dial memory 16 with extra areas each being associated with respective one of the labels for holding the number of times that the associated label has been actually used, updating such values in the individual areas, dividing the labels into groups each having nine labels in order of frequency of use, and sequentially assigning the variables DM (1), DM (2), ... DM (n) from the first group to the last group; and
(3) arranging all the labels stored in the dial memory 16 in the alphabetical order, dividing the labels into groups each having nine labels in the alphabetical order, and assigning the control variables DM (1), DM (2), ..., DM (n) from the first group to the last group.

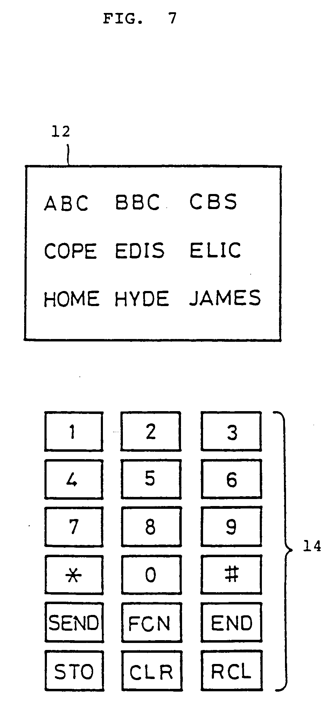

In Fig. 7, the display 12 is shown as displaying labels stored in the dial memory in the alphabetical order in a format matching the arrangement of the numeral keys "1" to "9", as stated above in the approach (3).

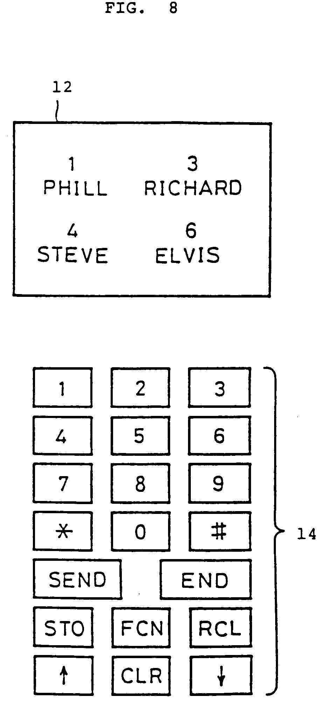

The number of labels to be displayed at the same time on the display 12 may be reduced, as shown in Fig. 8 specifically. Such a smaller number of labels will be preferable when the number of subscribers the user frequently call is not so great or when displaying a number of labels at a time reduces the size of characters excessively or limits the number of characters which can be displayed. In Fig. 8, four labels are displayed together on the display section 12 by way of example, and the numeral keys "1", "3", "4" and "6" correspond in position to labels "PHILL", "RICHARD", "STEVE" and "ELVIS", respectively. The user's operation for the origination of a call is the same as the operation described previously with reference to Fig. 5.

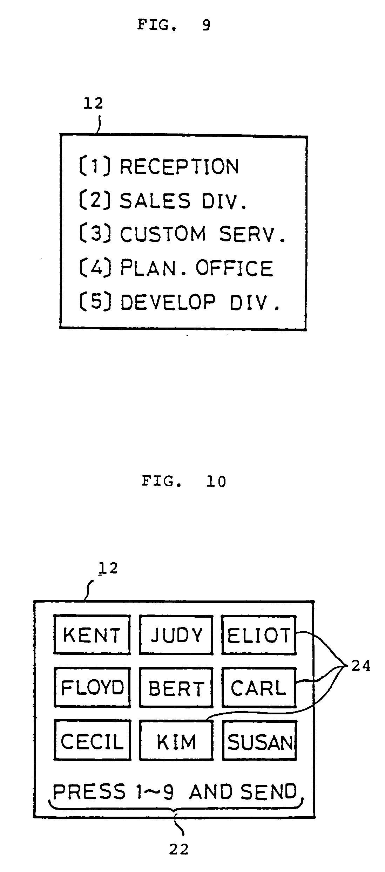

In the specific arrangements described with reference to Figs. 5, 7 and 8, a plurality of labels appear on the display section 12 in association with the physical positions of the keys on the key input section 14. Alternatively, as shown in Fig. 9, the numbers printed on the numeral keys and each being associated with a particular label may be displayed together with the labels. Such an alternative format is as advantageous as any of the previously stated formats. Further, as shown in Fig. 10, a simple message for guidance 22 and frames 24 surrounding the individual labels may be displayed on the display 12 together with the labels, so that even an inexperienced person may readily practice the call originating procedure particular to the illustrative embodiment.

In summary, it will be seen that the present invention provides a telephone which allows the user to call a desired subscriber rapidly by a simple procedure, i. e., by watching a display to find a desired subscriber out of a plurality of labels and then pressing a key associated with that label. The present invention, therefore, makes it needless for the user to memorize all the addresses of a dial memory and subscribers names matching the addresses or to prepare an exclusive table listing the names of subscribers and associated speed dialing numbers. This is desirable not only from the convenience standpoint but also from the cost performance standpoint.

Various modifications will become possible for those skilled in the art after receiving the teachings of the present disclosure without departing from the scope thereof as defined in the appended claims. For example, the telephone may be provided with a mechanism for scrolling the display 12 and arranged such that in response to the operation of a particular key on the key input section 14 the control 20 scrolls the display 12 to sequentially replace the labels one line at a time.

## Claims

1. A telephone having a memory (16) storing both a plurality of telephone numbers and a plurality of labels, each label being associated with a respective one of the telephone numbers, a display section (12), a key input section (14), call origination means (20) and a display control (20) for controlling, when the telephone is in a simple call origination mode, the display at the display section (12) of some of the plurality of labels stored in the memory (16), the call origination control means (20) originating a call when one of the labels appearing on the display section is selected by operating an associated one of the keys to dial the telephone number associated to the selected label and stored in the memory (16) characterised in that the keys in the key input section (14) associated with respective labels are arranged in accordance with the conventional arrangement of the numerical keys or a telephone keypad, and in that each respective associated label appearing on the display section (12) is arranged as a part of a two-dimensional layout in a position corresponding to the position of its respective key on the key input section (14).

2. A telephone as claimed in claim 1, wherein each of the labels is surrounded by a frame (24) representative of the key associated with the label.

3. A telephone as claimed in claim 1, wherein each of the labels displayed is accompanied by a number which corresponds to that which is printed on one of the keys associated with the label.

4. A telephone as claimed in claim 1, wherein the display control (20) causes a simple message for guidance to appear on the display together with a respective label.

5. A telephone as claimed in claim 1, wherein there is provided means to enable the number of labels (24) to be displayed on the display at a time to be varied.

## Patentansprüche

1. Telefon mit einem Speicher (16), der eine Vielzahl von Telefonnummern und eine Vielzahl von Kennmarken speichert, wobei jede Kennmarke jeweils einer der Telefonnummern zugeordnet ist, einem Sichtanzeigebereich (12), einem Tasteneingabebereich (14), Anrufeinrichtungen (20) und einer Sichtanzeigesteuerung (20) zur Steuerung der Sichtanzeige von einigen der Vielzahl von im Speicher (16) gespeicherten Kennmarken, auf dem Sichtanzeigebereich (12), wenn sich das Telefon in einem einfachen Anrufbetrieb befindet, wobei die Anrufsteuereinrichtung (20) einen Anruf erzeugt, wenn eine der im Sichtanzeigebereich erscheinenden Kennmarken durch Betätigung einer zugeordneten Taste zum Wählen der Telefonnummer ausgewählt wird, die der ausgewählten Kennmarke zugeordnet und im Speicher (16) gespeichert ist, dadurch gekennzeichnet, daß die Tasten des Tasteneingabebereiches (14), die den jeweiligen Kennmarken zugeordnet sind, entsprechend der üblichen Anordnung numerischer Tasten oder einer Telefontastatur angeordnet sind, und daß jede jeweils zugeordnete Kennmarke, die im Sichtanzeigebereich (12) erscheint, als Teil einer zweidimensionalen Anordnung in einer Position angeordnet ist, die der Position ihrer jeweiligen Taste des Tasteneingabebereiches (14) entspricht.

2. Telefon nach Anspruch 1, wobei jede der Kennmarken repräsentativ für die Taste, die der Kennmarke zugeordnet ist, von einem Rahmen (24) umgeben ist.

3. Telefon nach Anspruch 1, wobei jede angezeigte Kennmarke mit einer Nummer verbunden ist, die derjenigen entspricht, die auf eine der Tasten gedruckt ist, welche der Kennmarke zugeordnet ist.

4. Telefon nach Anspruch 1, wobei die Sichtanzeigesteuerung (20) eine einfache Nachricht zur Anleitung zusammen mit einer jeweiligen Kennmarke zum Erscheinen auf der Sichtanzeige bringt.

5. Telefon nach Anspruch 1, wobei Einrichtungen vorgesehen sind, durch welche die Anzahl der Kennmarken (24), die zu einem Zeitpunkt auf dem Display angezeigt werden, variiert werden kann.

## Revendications

1. Téléphone comportant une mémoire (16) mémorisant à la fois une multitude de numéros téléphoniques et une multitude de libellés, chaque libellé étant associé à un numéro de téléphone respectif parmi les numéros de téléphone, une section d'affichage (12), une section d'entrée par clavier (14), un moyen de lancement d'appel (20) et une commande d'affichage (20) pour commander, lorsque le téléphone est en mode de lancement d'un appel simple, l'affichage dans la section d'affichage (12) de certains parmi la multitude de libellés mémorisés dans la mémoire (16), le moyen de commande de lancement d'appel (20) lançant un appel lorsque l'un des libellés apparaissant sur la section d'affichage est sélectionné par l'enfoncement d'une touche associée parmi toutes les touches pour composer le numéro de téléphone associé au libellé sélectionné et stocké dans la mémoire (16) caractérisé en ce que les touches de la section d'entrée par clavier (14) associées aux libellés respectifs sont disposées en conformité avec la disposition classique des touches numériques ou clavier numérique de téléphone en ce que chaque libellé associé respectif apparaissant dans la section d'affichage (12) est présenté comme élément d'une disposition bi-dimensionnelle à l'endroit correspondant à la position de sa touche respective sur la section d'entrée par clavier (14).

2. Téléphone selon la revendication 1, dans lequel chacun des libellés est entouré par un cadre (24) représentant de la touche associée au libellé.

3. Téléphone selon la revendication 1, dans lequel chacun des libellés affichés est accompagné d'un numéro correspondant à celui qui est imprimé sur une des touches associées au libellé.

4. Téléphone selon la revendication 1, dans lequel la commande de l'affichage (20) entraîne l'apparition, dans l'affichage d'un message de guidage simple accompagné d'un à libellé respectif.

5. Téléphone selon la revendication 1, dans lequel est fourni un moyen de permettre la modification du nombre de libellés (24) à faire apparaître simultanément dans l'affichage.
